# EUROPEAN PATENT APPLICATION

(11) **EP 4 592 170 A1**
(43) Date of publication of application: **30.07.2025**
(21) Application number: 25153500.1
(22) Date of filing: 23.01.2025
(51) Int. Cl.: B62L 3/02

(54) **COMBINATION OF CABLE-PULL HYDRAULIC UPPER PUMP AND CABLE-PULL HYDRAULIC DISC BRAKE**

(30) Priority: 26.01.2024 CN 202410113494
(71) Applicant: Lanxi Jieke Sports Apparatus Manufacturing Manufacturing Co., Ltd., Lanxi, Zhejiang (CN)
(72) Inventor: Chen, Yao, Lanxi City, Zhejiang Province (CN); Wang, Yihuai, Lanxi City, Zhejiang Province (CN); Zheng, Chengguo, Lanxi City, Zhejiang Province (CN)
(74) Representative: Cabinet Chaillot

(57) **Abstract**

A combination of cable-pull hydraulic upper pump (10) and cable-pull hydraulic disc brake includes a cable-pull hydraulic upper pump (10) which is used with a bicycle handlebar stem, and includes an upper pump (10) that has a first cylinder (101) and a second cylinder (102). The upper pump (10) includes a first oil outlet (104) and a second oil outlet (105) that radially connect to the first cylinder (101). An oil passage hole (106) is coaxially arranged with the second oil outlet (105) and connects the first cylinder (101) and the second cylinder (102). Two drive members (20) are installed in the first cylinder (101) and the second cylinder (102). Two brake cables (60) are connected to the two drive. The hydraulic fluid in the first cylinder (101) flows out from the first oil outlet (104). The hydraulic fluid in the second cylinder (102) flows out from the second oil outlet (105) via the oil passage hole (106).

## Description

### BACKGROUND OF THE INVENTION

### 1. Fields of the invention

The present invention relates to the field of bicycles, and more particularly, to a combination of cable-pull hydraulic upper pump and cable-pull hydraulic disc brake.

### 2. Descriptions of Related Art

Currently, there are two types of control transmission methods for disc brakes, which are cable disc brakes and hydraulic disc brakes. Cable disc brakes have a simple structure and lower cost, but provide a poorer braking experience. Compared to cable disc brakes, hydraulic disc brakes have a higher cost but offer stronger braking power with less required force, and need less frequent maintenance. Therefore, many road bikes consider how to combine the advantages of both cable and hydraulic disc brakes during design and production, aiming to achieve a smooth and good braking experience while keeping costs down.

In existing technology, improvements are made to the brake lower pump by installing a cable-to-hydraulic conversion structure at the lower pump position to achieve this goal. For example, the Chinese patent with publication number CN216834128U, titled "A New Type of Cable-Pull Hydraulic Disc Brake for Bicycles," includes a main body composed of an inner cover and outer cover. A disc brake mechanism is set between the inner and outer covers. A cylinder is installed at the top of the inner cover, with a cylinder piston assembly inside. Above the cylinder is a rocker arm that is movably connected to the cylinder piston component, where the end of the rocker arm is rotatably connected to the top of the inner cover.

However, the brake lower pump provided in the above-related technology has limitations such as significantly increased volume due to added structure, limited installation space, and unchanged cable length requiring more braking force, leaving room for further improvement.

The present invention intends to provide a combination of cable-pull hydraulic upper pump and cable-pull hydraulic disc brake to eliminate shortcomings mentioned above.

### SUMMARY OF THE INVENTION

The present invention relates to a cable-pull hydraulic upper pump used in conjunction with a bicycle handlebar stem, and the cable-pull hydraulic upper pump comprises an upper pump having a first cylinder and a second cylinder that are parallel and pass through a middle portion of the upper pump. A first oil outlet and a second oil outlet are radially communicated with the first cylinder. An oil passage hole is coaxially arranged with the second oil outlet and communicated with the first cylinder and the second cylinder.

Two drive members are respectively installed in the first cylinder and the second cylinder. Two brake cables with their two respective first ends respectively connected to the two drive members to control movement of the two drive members, so that hydraulic fluid in the first cylinder flows out from the first oil outlet, and hydraulic fluid in the second cylinder flows out from the second oil outlet via the oil passage hole.

Preferably, the drive members include an end cap threadedly connected to a first end of the first cylinder or the second cylinder. An end part is threadedly connected to a second end of the first cylinder or the second cylinder. A cable hole is axially formed through a center of the end part, and the brake cable extends through the cable hole. A piston rod is movably inserted into the first cylinder or the second cylinder. A hollow hole is axially formed through a center of the piston rod, and the brake cable extends through the hollow hole. A piston ring is fixedly fitted around a middle section of the piston rod. A movement chamber is formed between the piston ring and the first end of the first cylinder or the second cylinder. A hydraulic fluid chamber is formed between the piston ring and the second end of the first cylinder or the second cylinder. A cable end terminal has a first end thereof inserted into a first end of the piston rod, a second end of the cable end terminal is positioned inside the end cap. A locking screw secures the first end of the brake cable to the cable end terminal. An elastic member has a first end thereof is fitted inside the hollow hole, and a second end of the elastic member is fitted against an inner wall of the end part to elastically position a normal position of the piston rod and provide an elastic resetting force after the piston rod moves. A piston limiting member is installed within the movement chamber to limit an assembly position of the piston rod.

Preferably, the piston rod has a protruding platform section extending radially from a middle section thereof. An annular piston groove is formed on the protruding platform section for positioning the piston ring.

Preferably, the piston limiting member includes a sealing ring fitted onto a section of the piston rod located in the movement chamber. The sealing ring has a first end thereof abutting against a side wall of the protruding platform section, and a second end of the sealing ring has an integrally formed first protrusion that is positioned with an inner wall of the movement chamber. A limiting ring is fitted onto a section of the piston rod located in the movement chamber and presses and secures an axial position of the sealing ring.

Preferably, an outer annular wall of the sealing ring located in the first cylinder has two integrally formed second protrusions. An annular flow channel is formed between the two second protrusions. The annular flow channel is communicated with the second oil outlet and the oil passage hole.

Preferably, the upper pump includes two refill ports formed on a side wall thereof. The two refill ports respectively inject hydraulic fluid into the two hydraulic fluid chambers.

Preferably, the upper pump has an oil reservoir mechanism for adjusting hydraulic fluid pressure in the two hydraulic fluid chambers. The oil reservoir mechanism includes two oil reservoir cavities which are formed parallel to each other at the first end or the second end, or both of the first and second ends of the upper pump. Two oil reservoir holes are respectively communicated with the two oil reservoir cavities, the first cylinder and second cylinder. The oil reservoir holes are coaxially arranged with the refill ports.

Preferably, the oil reservoir cavity has an oil filling port formed on one side thereof. An oil reservoir screw cap is installed on the oil filling port. A second sealing washer is installed on the side of the oil reservoir screw cap corresponding to the oil filling port so as to be used in conjunction with the oil reservoir screw cap to seal the oil filling port. A breathing pad is located in the upper pump and expands and contracts in response to hydraulic pressure changes to adjust a pressure in the oil reservoir cavity.

Preferably, the upper pump has a first connection part on one side thereof. The first connection part is adapted to be assembled with a second connection part formed at an end of the handlebar stem through bolts to clamp and secure the handlebar.

The present invention also provides a cable-pull hydraulic disc brake and comprises an upper pump having a first cylinder and a second cylinder that are parallel and pass through a middle portion of the upper pump. A first oil outlet and a second oil outlet are radially communicated with the first cylinder. An oil passage hole is coaxially arranged with the second oil outlet and communicated with the first cylinder and the second cylinder. Two drive members are respectively installed in the first cylinder and the second cylinder. Two brake cables whose two respective first ends are respectively connected to the two drive members to control movement of the two drive members, so that hydraulic fluid in the first cylinder flows out from the first oil outlet, and hydraulic fluid in the second cylinder flows out from the second oil outlet via the oil passage hole. Two oil tubes whose two respective first ends of the two oil tubes are respectively connected to the first oil outlet and the second oil outlet through swivel bolts. Two brake levers are respectively installed at both ends of a handlebar and respectively connected to two respective second ends of the two brake cables to pull and actuate the drive members when the brake levers are operated. Two brake lower pumps are respectively installed at the front/rear wheel of a bicycle frame and operationally worked with disc rotors. The brake lower pumps are respectively connected to two respective second ends of the two oil tubes to provide hydraulic braking to the disc rotors.

The combination of cable-pull hydraulic upper pump and cable-pull hydraulic disc brake of the present invention has at least the following technical effects:
Through installation at the handlebar stem of the bicycle frame, it replaces the original clamp connector while saving space.

The cable-pull hydraulic upper pump is hidden in this location, making the lengths of the bidirectional brake cables consistent, facilitating unified production.

After connecting the oil tubes which can directly enter the bike frame along the handlebar stem tube so as to reduce exposed oil tube length.

The present invention combines the advantages of cable disc brakes and hydraulic disc brakes, achieving smooth braking effects with less braking force.

The present invention uses simple and low-cost cable-pull brake levers to replace the upper pump of the hydraulic disc brake.

The present invention uses brake cables for length connection, shortening the oil tube length, greatly reducing costs and maintenance frequency

The present invention effectively integrates both cable and hydraulic systems while optimizing space usage, cable/tube routing, and overall cost-effectiveness.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the cable-pull hydraulic upper pump of the present invention;
Figure 2 is another perspective view of the cable-pull hydraulic upper pump of the present invention;
Figure 3 is a side view of the cable-pull hydraulic upper pump of the present invention;
Figure 4 is a sectional view, taken along line A-A in Figure 3;
Figure 5 is a sectional view, taken along line B-B in Figure 3;
Figure 6 is a perspective view of the drive member of the present invention;
Figure 7 is a perspective view of the upper pump of the present invention;

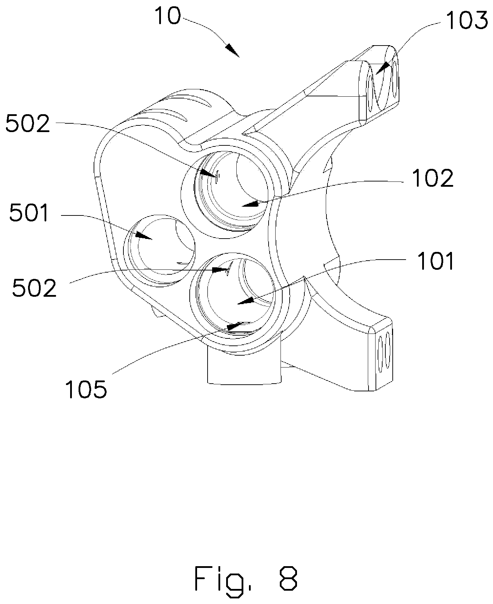

Figure 8 is another perspective view of the upper pump of the present invention;
Figure 9 is a perspective view of the cable-pull hydraulic upper pump of one embodiment of the present invention;
Figure 10 is a partially exploded perspective view of the cable-pull hydraulic upper pump of one embodiment of the present invention, and
Figure 11 is a perspective view of the third embodiment disclosed in the specification, wherein the upper pump and the disc brake of the present invention assembled on a bicycle handlebar.

### DETAILED DESCRIPTION OF THE PREFERRED EMBODIMENT

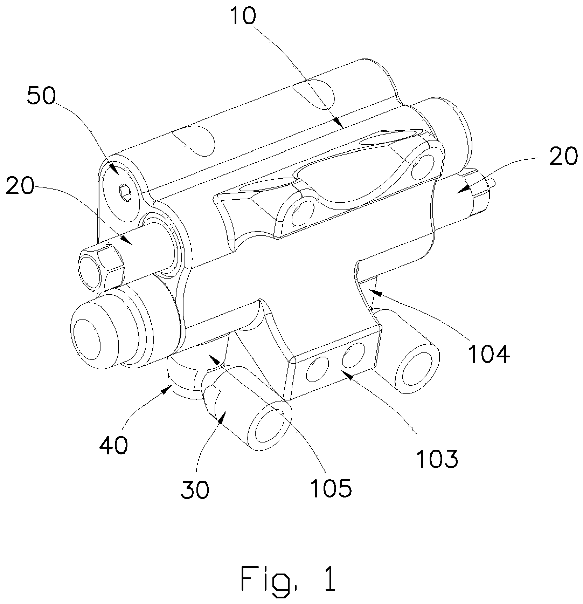

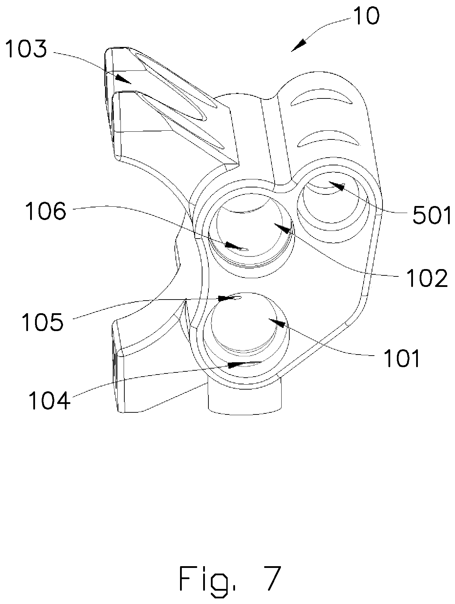

The present invention provides a cable-pull hydraulic upper pump that is used in conjunction with a handlebar stem of a bicycle frame. Specifically, in the first embodiment, the upper pump 10 has a first connection part 103 on one side, and the first connection part 103 is assembled with a second connection part formed at the end of the handlebar stem through bolts to clamp and secure the handlebar. On one hand, it replaces the original clamp connector, and on the other hand, the cable-pull hydraulic upper pump is hidden in this location, which can bidirectionally shorten the length of brake cables 60, and allow the oil tubes 30 to enter the bike frame along the handlebar stem, thereby reducing the exposed length of oil tubes 30 and providing effective protection. As shown in Figures 1-3 and 7, the cable-pull hydraulic upper pump of the present invention comprises an upper pump 10 having a first cylinder 101 and a second cylinder 102 that are parallel and pass through a middle portion of the upper pump 10. A first oil outlet 104 and a second oil outlet 105 are radially communicated with the first cylinder 101. An oil passage hole 106 is coaxially arranged with the second oil outlet 105 and communicated with the first cylinder 101 and the second cylinder 102.

Two drive members 20 are respectively installed in the first cylinder 101 and the second cylinder 102. Two brake cables 60 whose two respective first ends are respectively connected to the two drive members 20 to control movement of the two drive members 20, so that hydraulic fluid in the first cylinder 101 flows out from the first oil outlet 104, and hydraulic fluid in the second cylinder 102 flows out from the second oil outlet 105 via the oil passage hole 106.

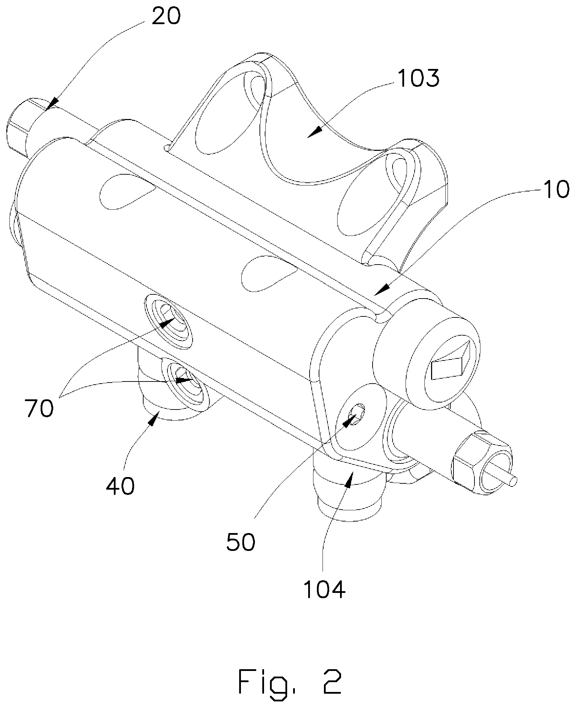

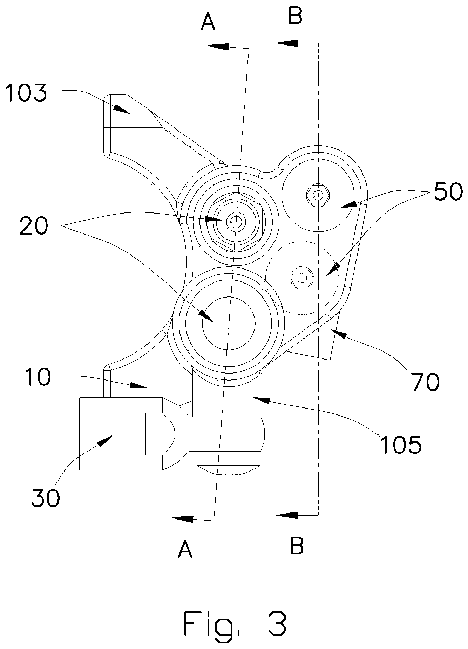

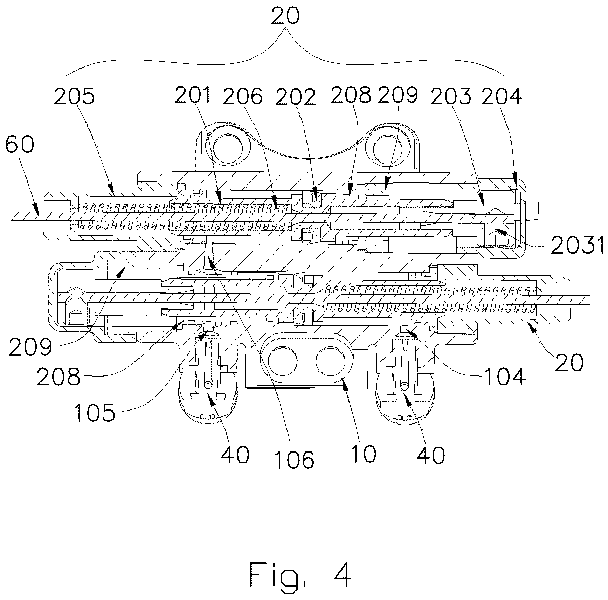

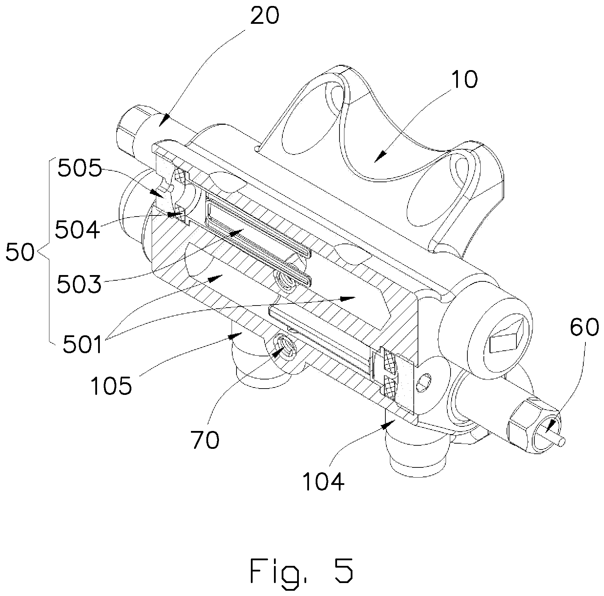

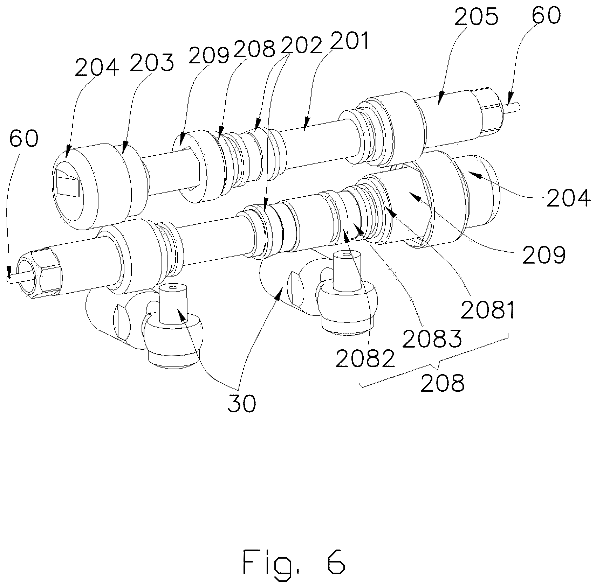

As shown in Figs. 4 to 6, the drive members 20 include an end cap 204 threadedly connected to a first end first cylinder 101 or the second cylinder 102 so as to seal the first end mentioned above. An end part 205 is threadedly connected to a second end of the first cylinder 101 or the second cylinder 102 so as to seal the second end mentioned above. A cable hole is axially formed through a center of the end part 205, and the brake cable 60 extends through the cable hole. A piston rod 201 is movably inserted into the first cylinder 101 or the second cylinder 102. A hollow hole is axially formed through a center of the piston rod 201, and the brake cable 60 extends through the hollow hole. The piston rod 201 has a protruding platform section extending radially from a middle section thereof. An annular piston groove is formed on the protruding platform section for positioning the piston ring 202. A piston ring 202 is fixedly fitted in the annular piston groove of the piston rod 201. A movement chamber is formed between the piston ring 202 and the first end of the first cylinder 101 or the second cylinder 102. The piston ring 202 is in contact with the inner wall of the annular piston groove. As shown in Fig. 3, the upper pump 10 includes two refill ports 70 formed on a side wall thereof. The two refill ports 70 respectively inject hydraulic fluid into the two hydraulic fluid chambers. As shown in Fig. 2, the refill ports 70 have threads to be connected with threaded caps to seal the refill ports 70.

A cable end terminal 203 has a first end thereof inserted into a first end of the piston rod 201, and a second end of the cable end terminal 203 is positioned inside the end cap 204. A locking screw secures the first end of the brake cable 60 to the cable end terminal 203. An elastic member 206 has a first end thereof is fitted inside the hollow hole, and a second end of the elastic member 206 is fitted against an inner wall of the end part 205 to elastically position a normal position of the piston rod 201 and provide an elastic resetting force after the piston rod 201 moves. A piston limiting member installed within the movement chamber to limit an assembly position of the piston rod 201.

Specifically, when assembling to a bicycle frame, there are two oil tubes 30, and two respective first ends of the two oil tubes 30 are respectively connected to the first oil outlet 104 and the second oil outlet 105 through swivel bolts 40. There are two brake levers 80 which are respectively installed at both ends of a handlebar and respectively connected to two respective second ends of the two brake cables 60 to pull and actuate the drive members 20 when the brake levers 80 are operated. There are two brake lower pumps 90 respectively installed at the front/rear wheel of a bicycle frame and operationally worked with disc rotors. The brake lower pumps 90 are respectively connected to two respective second ends of the two oil tubes 30 to provide hydraulic braking to the disc rotors.

Referring to Figures 1-4, when squeezing a brake lever on one side, pulling the brake cable 60 located at the lower position causes the piston rod 201 to move axially forward in the first cylinder 101 and, through the piston ring 202, drives the hydraulic fluid in the hydraulic fluid chamber to output through the first oil outlet 104. The fluid then enters the brake lower pump at the front/rear wheel through the oil tube 30, and the brake lower pump clamps the disc rotor of the front/rear wheel for hydraulic braking, with smooth fluid flow and steady braking action.

When squeezing the brake lever on the other side, pulling the brake cable 60 located at the upper position causes the piston rod 201 to move axially forward in the second cylinder 102 and, through the piston ring 202, drives the hydraulic fluid in the hydraulic fluid chamber to flow sequentially through the oil passage hole 106, enter the annular flow channel 2083, and then reach the second oil outlet 105 for output. The fluid then enters the brake lower pump at the front/rear wheel through the oil tube 30, and the brake lower pump clamps the disc rotor of the front/rear wheel for hydraulic braking, with smooth fluid flow and steady braking action.

As shown in Figures 4 to 6, the piston limiting member includes a sealing ring 208 fitted onto a section of the piston rod 201 located in the movement chamber. The sealing ring 208 has a first end thereof abutting against a side wall of the protruding platform section, and a second end of the sealing ring 208 has an integrally formed first protrusion 2081 that is positioned with an inner wall of the movement chamber. An outer annular wall of the sealing ring 208 located in the first cylinder 101 has two integrally formed second protrusions 2082. An annular flow channel 2083 is formed between the two second protrusions 2082. The annular flow channel 2083 is communicated with the second oil outlet 105 and the oil passage hole 106. As shown in Figure 4, a limiting ring 209 is fitted onto a section of the piston rod 202 located in the movement chamber and presses and secures an axial position of the sealing ring 208.

In this embodiment, referring to Figure 4, since the oil passage between the first cylinder 101 and the first oil outlet 104 is shorter, there is no need to additionally set up an annular flow channel 2083. Therefore, the overall length of the sealing ring 208 is shortened, and the limiting ring 209 can be directly threaded and assembled with the movement chamber of the first cylinder 101. More specifically, the limiting ring 209 located in the first cylinder 101 has external threads, and the limiting ring 209 is threaded and assembled with internal threads set on the inner wall of the first cylinder 101.

The second cylinder 102 is separated from the second oil outlet 105 by the first cylinder 101, so it needs to consider the hydraulic fluid flowing through the oil passage hole 106, entering the annular flow channel 2083, and then reaching the second oil outlet 105. Therefore, the sealing ring 208 structure needs to be designed longer to accommodate the oil passage formation. Thus, considering both the movement stroke of the piston rod 201 and the length of the sealing ring 208, the limiting ring 209 has external threads, the external threads at its first end are threaded and assembled with the internal threads set on the inner wall of the second cylinder 102, and the external threads at its second end are threaded and assembled with the internal threads of the end cap 204 so as to achieve both the fixing of the piston limiting member and the sealing of the first end of the second cylinder 102.

Accordingly, the cable-pull hydraulic upper pump of the present invention, through its installation at the handlebar stem of the bicycle frame, on one hand, it replaces the original clamp connector while saving space, and on the other hand, the cable-pull hydraulic upper pump is hidden in this location, making the lengths of the bidirectional brake cables 60 consistent, facilitating unified production. After connecting the oil tubes 30, they can directly enter the bike frame along the handlebar stem tube, reducing the exposed length of oil tubes 30. The present invention combines the advantages of cable disc brakes and hydraulic disc brakes, achieving smooth braking effects with less braking force. The present invention uses simple and low-cost cable-pull brake levers to replace the upper pump of the hydraulic disc brake. The present invention uses brake cables 60 for length connection, shortening the oil tube length, greatly reducing costs and maintenance frequency.

A second embodiment is to be disclosed hereinafter, the differences from the first embodiment is that the upper pump 10 has an oil reservoir mechanism 50 for adjusting hydraulic fluid pressure in the two hydraulic fluid chambers. The oil reservoir mechanism 50 includes two oil reservoir cavities 501 which are formed parallel to each other at the first end or the second end, or both of the first and second ends of the upper pump 10. Two oil reservoir holes 502 are respectively communicated with the two oil reservoir cavities 501, the first cylinder 101 and second cylinder 102. The oil reservoir holes 502 are coaxially arranged with the refill ports 70.

The oil reservoir cavity 501 has an oil filling port formed on one side thereof, and an oil reservoir screw cap 505 is installed on the oil filling port. A sealing washer 504 is installed on the side of the oil reservoir screw cap 505 corresponding to the oil filling port so as to be used in conjunction with the oil reservoir screw cap 505 to seal the oil filling port. A breathing pad 503 is located in the upper pump 10 and expands and contracts in response to hydraulic pressure changes to adjust a pressure in the oil reservoir cavity.

The cable-pull hydraulic upper pump of the present invention in this embodiment includes two oil reservoir cavities 501 set on the upper pump 10 that respectively regulate the hydraulic pressure of the first cylinder 101 and second cylinder 102. Each oil reservoir cavity 501 is equipped with a breathing pad 503 that expands and contracts in response to hydraulic pressure changes, effectively adjusting the hydraulic fluid pressure during braking in the first cylinder 101 and second cylinder 102 so as to maintain and optimize the smooth braking effect of the hydraulic disc brake.

A third embodiment of the present invention is to disclose a cable-pull hydraulic disc brake and includes the cable-pull hydraulic upper pump as disclosed in the first and second embodiments, and comprises two brake levers which are respectively installed at both ends of the handlebar and respectively connected to the second ends of the two brake cables 60 to pull the drive members 20 to move when the brake levers 80 are operated. Two oil tubes 30 whose first ends are respectively connected to the first oil outlet 104 and the second oil outlet 105 through swivel bolts 40. Two brake lower pumps 90 which are respectively installed at the front/rear wheel positions of the bicycle frame and set up to work with disc rotors. The brake lower pumps are respectively connected to the second ends of the two oil tubes 30 to provide hydraulic braking to the disc rotors.

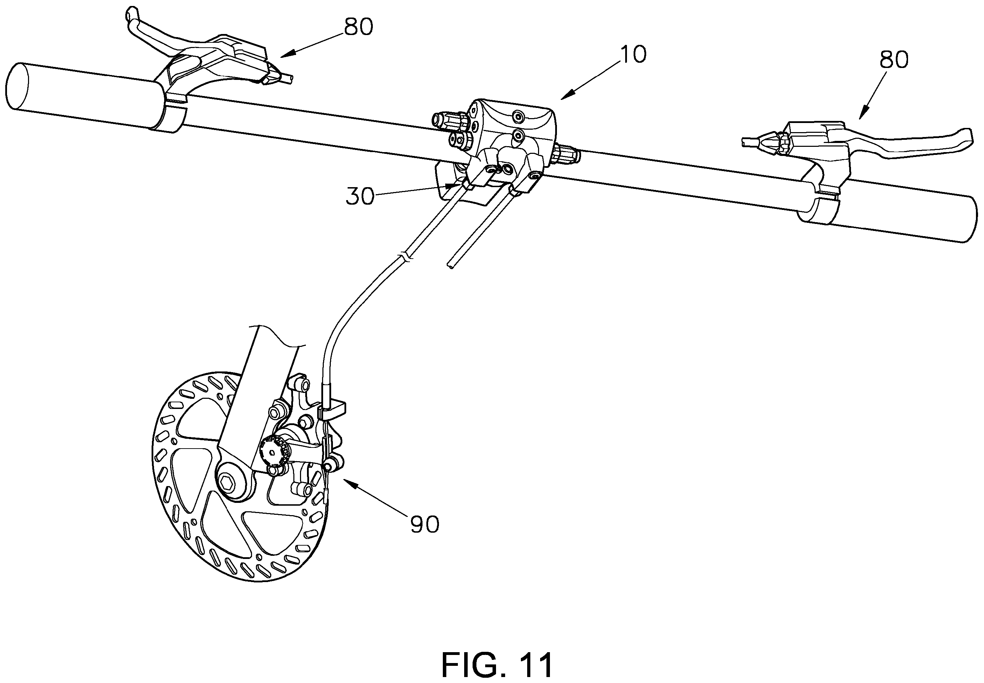

Furthermore, road bikes often use drop handlebars to lower the upper body and reduce wind resistance. Due to limited installation space on drop handlebars, cable disc brake levers are commonly used, resulting in poor user experience. The cable-pull hydraulic disc brake provided in the third embodiment of the present invention can fully accommodate the hydraulic disc brake needs of cable disc brake levers, achieving smooth braking effects with less braking force. Meanwhile, flat-bar road bikes have also appeared in the market, and the cable-pull hydraulic disc brake provided in the third embodiment of the present invention can also fully accommodate flat-bar road bikes, as shown in Figure 11, combining the advantages of both cable disc brakes and hydraulic disc brakes.

The cable-pull hydraulic disc brake provided in the third embodiment of the present invention, through its installation at the handlebar stem, on one hand, it replaces the original clamp connector while saving space, on the other hand, the combined cable-pull hydraulic upper pump is hidden in this location, making the lengths of the bidirectional brake cables 60 consistent, facilitating unified production. After connecting the oil tubes 30, they can directly enter the bike frame along the handlebar stem tube, reducing the exposed length of oil tubes 30. The present invention combines the advantages of cable disc brakes and hydraulic disc brakes, achieving smooth braking effects with less braking force. The present invention uses simple and low-cost cable-pull brake levers to replace the hydraulic disc brake's upper pump. The present invention uses brake cables 60 for length connection, shortening the oil tube length, greatly reducing costs and maintenance frequency. The oil reservoir mechanism 50 respectively regulates the hydraulic fluid pressure during braking in the first cylinder 101 and second cylinder 102, maintaining and optimizing the smooth braking effect of the hydraulic disc brake.

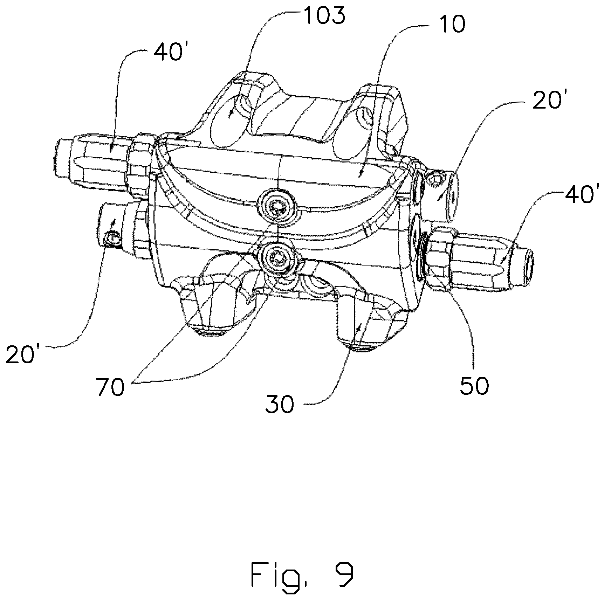

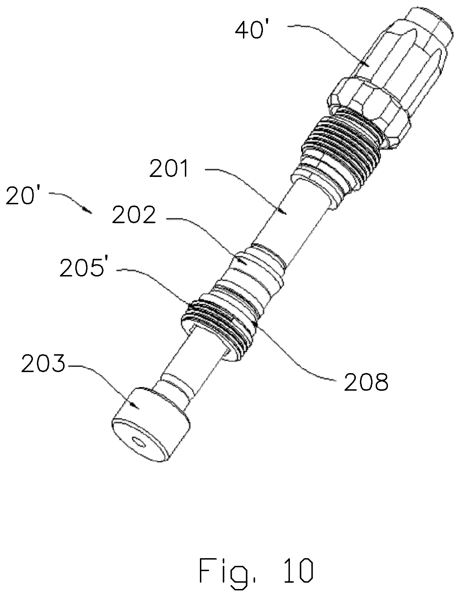

Please continue to refer to Figures 9 and 10, for another specific embodiment of this invention, where the first ends of the first cylinder 101 and second cylinder 102 near the pulling direction of the drive member 20' are fitted with swivel bolts 40'. The swivel bolts 40' are fitted over the inner cable and can actively push against the end of the cable housing to adjust the cable tension. Please refer to Figure 11, which shows an illustration of the oil tubes 30, brake levers 80, and brake lower pumps 90 combined as one unit with the bicycle handlebar, effectively reducing the handlebar's wind resistance, creating a smooth handlebar appearance without affecting the rider's operation. Furthermore, it can also meet the needs of replacing existing road bike hydraulic disc brakes on existing frames, on one hand reducing assembly costs, and on the other hand eliminating the need for manufacturers to redesign frames and invest in production equipment improvements, thus lowering production costs.

While we have shown and described the embodiment in accordance with the present invention, it should be clear to those skilled in the art that further embodiments may be made without departing from the scope of the present invention.

## Claims

1. A cable-pull hydraulic upper pump used in conjunction with a bicycle handlebar stem, and comprising:
an upper pump having a first cylinder and a second cylinder that are parallel and pass through a middle portion of the upper pump, a first oil outlet and a second oil outlet radially communicated with the first cylinder, an oil passage hole coaxially arranged with the second oil outlet and communicated with the first cylinder and the second cylinder;
two drive members respectively installed in the first cylinder and the second cylinder, and
two brake cables, two respective first ends of the two brake cables respectively connected to the two drive members to control movement of the two drive members, so that hydraulic fluid in the first cylinder flows out from the first oil outlet, and hydraulic fluid in the second cylinder flows out from the second oil outlet via the oil passage hole.

2. The cable-pull hydraulic upper pump as claimed in claim 1, wherein the drive members include an end cap threadedly connected to a first end of the first cylinder or the second cylinder, an end part is threadedly connected to a second end of the first cylinder or the second cylinder, a cable hole is axially formed through a center of the end part, and the brake cable extends through the cable hole, a piston rod is movably inserted into the first cylinder or the second cylinder, a hollow hole is axially formed through a center of the piston rod, and the brake cable extends through the hollow hole, a piston ring is fixedly fitted around a middle section of the piston rod, a movement chamber is formed between the piston ring and the first end of the first cylinder or the second cylinder, a hydraulic fluid chamber is formed between the piston ring and the second end of the first cylinder or the second cylinder, a cable end terminal has a first end thereof inserted into a first end of the piston rod, a second end of the cable end terminal is positioned inside the end cap, a locking screw secures the first end of the brake cable to the cable end terminal, an elastic member has a first end thereof is fitted inside the hollow hole, a second end of the elastic member is fitted against an inner wall of the end part to elastically position a normal position of the piston rod and provide an elastic resetting force after the piston rod moves, a piston limiting member installed within the movement chamber to limit an assembly position of the piston rod.

3. The cable-pull hydraulic upper pump as claimed in claim 2, wherein the piston rod has a protruding platform section extending radially from a middle section thereof, an annular piston groove is formed on the protruding platform section for positioning the piston ring.

4. The cable-pull hydraulic upper pump as claimed in claim 3, wherein the piston limiting member includes a sealing ring fitted onto a section of the piston rod located in the movement chamber, the sealing ring has a first end thereof abutting against a side wall of the protruding platform section, a second end of the sealing ring has an integrally formed first protrusion that is positioned with an inner wall of the movement chamber, a limiting ring is fitted onto a section of the piston rod located in the movement chamber and presses and secures an axial position of the sealing ring.

5. The cable-pull hydraulic upper pump as claimed in claim 4, wherein an outer annular wall of the sealing ring located in the first cylinder has two integrally formed second protrusions, an annular flow channel is formed between the two second protrusions, the annular flow channel is communicated with the second oil outlet and the oil passage hole.

6. The cable-pull hydraulic upper pump as claimed in claim 2, wherein the upper pump includes two refill ports formed on a side wall thereof, the two refill ports respectively inject hydraulic fluid into the two hydraulic fluid chambers.

7. The cable-pull hydraulic upper pump as claimed in claim 6, wherein the upper pump has an oil reservoir mechanism for adjusting hydraulic fluid pressure in the two hydraulic fluid chambers, the oil reservoir mechanism includes two oil reservoir cavities which are formed parallel to each other at the first end or the second end, or both of the first and second ends of the upper pump, two oil reservoir holes are respectively communicated with the two oil reservoir cavities, the first cylinder and second cylinder, the oil reservoir holes are coaxially arranged with the refill ports.

8. The cable-pull hydraulic upper pump as claimed in claim 1, wherein the oil reservoir cavity has an oil filling port formed on one side thereof, an oil reservoir screw cap is installed on the oil filling port, a sealing washer is installed on the side of the oil reservoir screw cap corresponding to the oil filling port so as to be used in conjunction with the oil reservoir screw cap to seal the oil filling port, a breathing pad is located in the upper pump and expands and contracts in response to hydraulic pressure changes to adjust a pressure in the oil reservoir cavity.

9. The cable-pull hydraulic upper pump as claimed in claim 1, wherein the upper pump has a first connection part on one side thereof, the first connection part is adapted to be assembled with a second connection part formed at an end of the handlebar stem through bolts to clamp and secure the handlebar.

10. A cable-pull hydraulic disc brake comprising:
an upper pump having a first cylinder and a second cylinder that are parallel and pass through a middle portion of the upper pump, a first oil outlet and a second oil outlet radially communicated with the first cylinder, an oil passage hole coaxially arranged with the second oil outlet and communicated with the first cylinder and the second cylinder;
two drive members respectively installed in the first cylinder and the second cylinder;
two brake cables, two respective first ends of the two brake cables respectively connected to the two drive members to control movement of the two drive members, so that hydraulic fluid in the first cylinder flows out from the first oil outlet, and hydraulic fluid in the second cylinder flows out from the second oil outlet via the oil passage hole;
two oil tubes, two respective first ends of the two oil tubes respectively connected to the first oil outlet and the second oil outlet through swivel bolts;
two brake levers adapted to be respectively installed at both ends of a handlebar and respectively connected to two respective second ends of the two brake cables to pull and actuate the drive members when the brake levers are operated, and
two brake lower pumps adapted to be respectively installed at the front/rear wheel of a bicycle frame and adapted to be operationally worked with disc rotors, the brake lower pumps respectively connected to two respective second ends of the two oil tubes to provide hydraulic braking to the disc rotors.
